# EUROPEAN PATENT APPLICATION

(11) **EP 0 776 940 A2**
(43) Date of publication of application: **04.06.1997**
(21) Application number: 96308402.5
(22) Date of filing: 20.11.1996
(51) Int. Cl.: C08L 77/00, C08L 71/12

(54) **Compatibilized polyphenylene ether-polyamide compositions**

(30) Priority: 30.11.1995 US 565137
(71) Applicant: GENERAL ELECTRIC COMPANY, Schenectady, NY 12345 (US)
(72) Inventor: Silvi, Norberto, Clifton Park, New York 12065 (US); Brown, Sterling Bruce, Schenectady, New York 12309 (US); Giammattei, mark Howard, Selkirk, New York 12158 (US); Rice, Steven Thomas, Scotia, New York 12302 (US)
(74) Representative: Szary, Anne Catherine, Dr.

(57) **Abstract**

Polyphenylene ether-polyamide compositions (also containing an impact modifying polymer) having improved physical and rheological properties are prepared by incorporating therein at least one non-polymeric functionalizing compound such as citric acid and a minor proportion of at least one polyepoxy compound having an epoxy equivalent weight of at most about 4,000, preferably an epoxidized novolak, or at least one poly(ortho ester).

## Description

### Background of the Invention

This invention relates to resinous blends, and more particularly to blends of polyphenylene ethers and polyamides.

Polyphenylene ether-polyamide blends have been known for some time to possess properties which are a combination of the beneficial properties of both resins. These include high thermal stability and high impact strength afforded by polyphenylene ethers, and solvent resistance afforded by polyamides.

At least one impact modifier is usually also present in the polyphenylene ether-polyamide composition. Suitable impact modifiers include those compatible with polyamides and especially those compatible with polyphenylene ethers.

For the preparation of blends other than those containing a minimum proportion of polyamide, the presence of a compatibilizer is necessary since the two polymers are otherwise incompatible. Absent compatibilization, morphological examination of polyphenylene ether-polyamide blends typically shows a continuous polyamide phase with polyphenylene ether and impact modifier forming a second phase poorly dispersed therein, resulting in the formation of laminar structures with poor physical properties.

Numerous types of compatibilizers for polyphenylene ether-polyamide compositions are known in the art. For the most part, they contain a plurality of functional groups illustrated by carboxylic acid, epoxide and olefinic groups. The presence of such compatibilizers is believed to facilitate the formation of block copolymer structures between the polyphenylene ether and polyamide.

Compatibilized polyphenylene ether-polyamide compositions are frequently used for injection molding of large automotive parts, including fenders and bumpers. It is sometimes found, however, that the molded parts have an undesirable surface appearance, especially when subjected to severe molding conditions such as high injection speeds or long residence times in the mold, which are often necessary in the case of large parts. In particular, the surfaces often have matte patches of scaly "sharkskin" appearance separated by regions of glossy finish. Inspection by scanning electron microscopy shows areas of flattened domains separated by large voids and elongated fibrillar structures oriented in the main flow direction. Such surface defects render the molded parts unsuitable, since the painted surfaces are visually defective.

A further problem is typically encountered in blow molding of polyphenylene ether-polyamide blends, a process also having potential for the fabrication of large parts. A parison for blow molding forms elastically under rapid extension, making high elastic deformation an important theological property. Often, elastic deformation for such blends is undesirably low, as shown by a low complex viscosity and a low storage modulus.

The incorporation of polyepoxy compounds in polyphenylene ether-polyamide blends for various purposes has been disclosed. For example, U.S. Patent 5,237,002 describes polyphenylene ether-polyamide blends which may also contain a compatibilizer, an epoxy compound and a rubber which is a copolymer of aliphatic olefins, an alkenylaromatic compound and an unsaturated carboxylic acid or anhydride. The carboxylic acid group-containing resin and the epoxy compound are disclosed as improving the processability'of the blend. However, no means for improving surface appearance or increasing storage modulus are suggested.

Japanese Kokai 1/129,057 and Kokai 1/129,058 disclose blends of polyphenylene ethers, polyamides, compatibilizers, styrene-type resins and rubber-type polymers which may include epoxy-containing units. The single epoxy group-containing copolymer is prepared from 97 parts by weight of styrene and 3 parts of glycidyl methacrylate. Upon calculation, the epoxy equivalent weight of such a polymer is found to be 4,739.

Japanese Kokai 3/277,657 (abstracted in *Chemical Abstracts, 116,* 175463u, 1992) discloses polyphenylene ether-polyamide blends which also contain a thermoplastic polyester, a compatibilizer and a bisphenol-based epoxy resin. They are described as having good water resistance and strength.

European patent application 557,086 describes similar blends having flame retardancy. The polyepoxide employed therein is a halogenated bisphenol epoxy resin with an epoxy equivalent weight greater than 5,000.

Experience has shown that the presence of polyepoxy compounds having high epoxy equivalent weights, particularly above 4,000, has serious disadvantages. The number of mers (i.e., structural units) in such polymers is high, which may detract from the compatibility of the polyepoxy compound with the other blend components and cause deterioration in various properties of the blends.

### Summary of the Invention

The present invention is based on the discovery that various properties, including surface appearance and elastic deformation properties, of compatibilized polyphenylene ether-polyamide blends are improved by the addition of a polyepoxy compound of low epoxy equivalent weight.

Accordingly, the invention includes resinous compositions free from condensation polyesters, said compositions comprising the following and any reaction products thereof:
(A) a continuous phase comprising at least one polyamide;
(B) a polyphenylene ether resin;
(C) at least one impact modifying polymer;
(D) a non-polymeric functionalizing compound containing at least two functional groups capable of reacting with polyphenylene ethers and polyamides; and
(E) a minor proportion, effective to improve physical properties or surface appearance, of at least one polyepoxy compound having an epoxy equivalent weight of at most about 4,000 or at least one poly(ortho ester);
components B and C forming a dispersed phase in said continuous phase.

### Detailed Description; Preferred Embodiments

The invention is inclusive of simple blends of the above-designated materials and also of compositions in which two or more of said materials have undergone chemical reaction. When proportions are specified, they apply to the originally incorporated materials rather than those remaining after any such reaction.

Polyamides suitable for use as reagent A, the continuous phase, may be made by any known method. They preferably contain a substantial proportion of amine end groups. In many instances, polyamides in which the amine end group concentration is at least about 60 microequivalents per gram are particularly useful. It is also within the scope of the invention, however, to employ predominantly carboxylic acid-terminated polyamides.

Suitable polyamides include those of the type prepared by the polymerization of a monoamino-monocarboxylic acid or a lactam thereof having at least 2 carbon atoms between the amino and carboxylic acid group, of substantially equimolar proportions of a diamine which contains at least 2 carbon atoms between the amino groups and a dicarboxylic acid, or of a monoaminocarboxylic acid or a lactam thereof as defined above together with substantially equimolar proportions of a diamine and a dicarboxylic acid. The dicarboxylic acid may be used in the form of a functional derivative thereof, for example, an ester or acid chloride.

Examples of the aforementioned monoamino-monocarboxylic acids or lactams thereof which are useful in preparing the polyamides include those compounds containing from 2 to 16 carbon atoms between the amino and carboxylic acid groups, said carbon atoms forming a ring with the -CO-NH- group in the case of a lactam. As particular examples of aminocarboxylic acids and lactams there may be mentioned ε-aminocaproic acid, butyrolactam, pivalolactam, ε-caprolactam, capryllactam, enantholactam, undecanolactam, dodecanolactam and 3- and 4-aminobenzoic acids.

Diamines suitable for use in the preparation of the polyamides include the straight chain and branched chain alkyl, aryl and alkaryl diamines. Illustrative diamines are trimethylenediamine, tetramethylenediamine, pentamethylenediamine, octamethylenediamine, hexamethylenediamine (which is often preferred), trimethylhexamethylenediamine, m-phenylenediamine and m-xylylenediamine.

Suitable dicarboxylic acids include those which contain an aliphatic or aromatic group containing at least 2 carbon atoms separating the carboxy groups. The aliphatic acids are often preferred; they include sebacic acid, octadecanedioic acid, suberic acid, glutaric acid, pimelic acid and adipic acid.

For most purposes, the preferred polyamides by reason of their availability and particular suitability are poly(hexamethylene adipamide), hereinafter designated "polyamide-66", and poly(ε-aminocaproamide), hereinafter designated "polyamide-6". Polyamides having an amine end group concentration of at least about 20 microequivalents per gram are especially preferred, by reason of their suitability for compatibilization via copolymer formation with the polyphenylene ether.

The polyphenylene ethers employed as component B according to the present invention are known polymers comprising a plurality of structural units of the formula 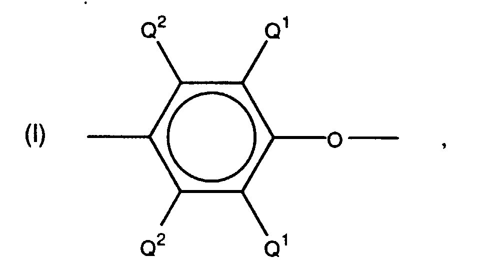 wherein in each of said units independently, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Most often, each Q¹ is alkyl or phenyl, especially C₁₋₄ alkyl, and each Q² is hydrogen.

Both homopolymer and copolymer polyphenylene ethers are included. The preferred homopolymers are those containing 2,6-dimethyl-1,4-phenylene ether units. Suitable copolymers include random copolymers containing such units in combination with (for example) 2,3,6-trimethyl-1,4-phenylene ether units. Also included are polyphenylene ethers containing moieties prepared by grafting onto the polyphenylene ether in known manner such materials as vinyl monomers or polymers such as polystyrenes and elastomers, as well as coupled polyphenylene ethers in which coupling agents such as low molecular weight polycarbonates, quinones, heterocycles and formals undergo reaction in known manner with the hydroxy groups of two polyphenylene ether chains to produce a higher molecular weight polymer, provided a substantial proportion of free OH groups remains.

The polyphenylene ether has an intrinsic viscosity greater than about 0.25, most often in the range of about 0.25-0.6 and especially 0.4-0.6 dl./g., as measured in chloroform at 25°C.

The polyphenylene ethers are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Particularly useful polyphenylene ethers for many purposes are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a byproduct diphenoquinone is present, especially in a copper-halide-secondary or tertiary amine system. A substantial proportion of the polymer molecules, typically constituting as much as about 90% by weight of the polymer, may contain at least one of said aminoalkyl-containing and 4-hydroxybiphenyl end groups.

It will be apparent to those skilled in the art from the foregoing that the polyphenylene ethers contemplated for use in the present invention include all those presently known, irrespective of variations in structural units or ancillary chemical features.

Component C, the impact modifying polymer, may be any polymer known to improve the impact strength of polyphenylene ether-polyamide blends. Examples of suitable polymers are high impact polystyrene; polydienes such as polyisoprene and polybutadiene; styrene-diene block copolymers including diblock and triblock copolymers, in which the diene structural units may be partially or entirely hydrogenated; olefin polymers containing carboxylic acid or ester groups and core-shell polymers having rubbery cores and stiff shells with carboxylic acid groups or functional derivatives thereof (e.g., anhydride, ester, amide or imide groups). The preferred impact modifiers are those free from carboxylic acid groups or functional derivatives thereof, and especially the aforementioned styrene-diene block copolymers.

Reagent D, the functionalizing agent, may be any of several known non-polymeric compounds having functional groups capable of reacting with polyphenylene ethers and/or polyamides, thereby forming copolymeric molecules. Such groups include carboxylic acid, anhydride, amide, ester, ortho ester, epoxide, olefin, halotriazine, phosphate, hydroxy and amino groups. Preferably, reagent D contains at least one group capable of reacting with each of reagents A and B. Illustrative functionalizing compounds include maleic anhydride, fumaric acid, citric acid, trimellitic anhydride acid chloride, glycidyl methacrylate, mesityl glycidyl chlorocyanurate, 4-acryloyloxymethyl-2-methoxy-2-methyl-1 ,3-dioxolane, 2-chloro-4-(2-methoxy-2-methyl-1,3-dioxolanylmethoxy)-6-phenoxy-1,3,5-triazine and 2-chloro-4-(2-diethylphosphatoethoxy)-6-mesitoxy-1,3,5-triazine.

The chemical nature of the functionalizing compound will determine, to some extent, how it is incorporated in the composition. For example, such functionalizing compounds as chlorotriazines react rapidly with polyphenylene ethers and are normally blended first with the polyphenylene ether in solution, after which the resulting reaction product is blended with the other constituents. On the other hand, compounds such as maleic anhydride, fumaric acid and citric acid may conveniently be blended simultaneously in the melt with the polyphenylene ether and the other constituents, whereupon the functionalizing reactions take place.

The presence of reagent E, the polyepoxy compound or poly(ortho ester), is in large part responsible for the unexpected improvements in physical properties and surface appearance exhibited by the compositions of this invention. The effects of such compounds (hereinafter sometimes designated "modifier" for simplicity) are to decrease the particle size of the dispersed phase and modify the elastic deformation properties of the blend, with an increase in storage modulus. Often, the rheological modification provided by the modifier permits the substitution for some or all of a highly elastic, expensive polyamide of a cheaper polyamide having a lower degree of elasticity.

Polyepoxy compounds which may be employed as component E according to this invention include simple aliphatic diepoxides such as dodecatriene dioxide, dipentene dioxide and 1,2,7,8-diepoxyoctane; bis-glycidyl ethers/esters such as the bisglycidyl ether of bisphenol A and its condensation products; alicyclic diepoxides such as 3,4-epoxycyclohexyl 3,4-epoxycyclohexanecarboxylate and bis(3,4-epoxycyclohexylmethyl) adipate; mixed aliphatic/alicyclic diepoxides such as vinylcyclopentadiene dioxide and butenylcyclopentene dioxide; epoxidized novolak resins; epoxidized heterocycles such as triglycidyl isocyanurate; addition polymers of ethylenically unsaturated epoxy compounds such as glycidyl methacrylate; and epoxidized oils such as epoxidized tall oil, linseed oil and soybean oil.

The,epoxidized novolaks are often preferred by reason of their particular suitability and relatively low cost, with the reaction products of o-cresol novolaks with epichlorohydrin often being most preferred. When flame retardancy is an important consideration, halogenated polyepoxy compounds such as brominated bisphenol A glycidyl ethers may be employed.

The epoxy equivalent weight of reagent E should be no greater than about 4,000, to avoid adverse effects on the properties of the composition. Most often, it is no higher than about 2,000 and preferably no higher than about 500. It is also strongly preferred that the molecular weight of reagent E not be above 4,000 since higher molecular weight polyepoxides may adversely affect compatibility of the composition constituents.

Poly(ortho esters) may also be employed as reagent E. Suitable compounds of this type are disclosed in copending, commonly owned European application No. 96304233.8, the disclosure of which is incorporated by reference herein. An example is the compound prepared by the reaction of two or more equivalents of 4-hydroxymethyl-2-methoxy-2-methyl-1,3-dioxolane with terephthaloyl chloride.

When reagent E is in particulate rather than pelletized form, as illustrated by epoxidized novolaks, it is often desirable to incorporate a minor amount of a lubricant in the composition to facilitate uniform dispersion of the polyepoxy compound in the blend of pelletized polymers. Suitable lubricants include low molecular weight hydrogenated α-olefin polymers.

The proportions of components A, B and C in the compositions of this invention are not critical, so long as the polyamide is the continuous phase and polyphenylene ether plus impact modifier forms the dispersed phase. In general, the proportion of polyphenylene ether will be about 25-60% and the proportion of impact modifier about 2-20% by weight based on total components A, B and C, with the balance being polyamide. Compatibilizer will be present in the amount of about 0.1-1.0 part per 100 parts of resin (i.e., of the combination of components A, B and C), and reagent E in the amount of about 0.1-1.25 phr. When a lubricant is employed, it is typically present in the amount of about 0.1-0.8 phr.

The order of blending of the constituents of the compositions of this invention is not critical from an inventive standpoint, although it may be important for other art-recognized reasons. For example, certain compatibilizers are best blended first with the polyphenylene ether under reactive conditions, said conditions typically including the presence of a common solvent. Also, the resinous constituents are typically wetted with any lubricant employed prior to blending with reagent E to facilitate intimate mixing.

Under most conditions, melt blending is employed. It may be batchwise or continuous, with such apparatus as Brabender mixers being employed for batch blending and extruders typically being utilized for continuous blending.

The invention is illustrated by the following examples. All parts are by weight. Molecular weights are weight average and, in the case of polymers readily soluble in organic solvents, were determined by gel permeation chromatography. The following constituents were employed:
PPE: a poly(2,6-dimethyl-1,4-phenylene ether) having an intrinsic viscosity of 0.46 dl/g as measured in chloroform at 25°C.
PA1 : a polyamide-66 having an amine end group concentration of 38 microequivalents per gram, commercially available from DuPont under the designation "FE3704".
PA2: a polyamide-6 having a molecular weight of 48,300 and an amine end group concentration of 120 microequivalents per gram, commercially available from Unitika under the designation "M8020A".
PA3: a polyamide-6 having a molecular weight of 65,800 and an amine end group concentration of 60.2 microequivalents per gram, commercially available from Allied Chemical under the trade name "CAPRON 8202NL".
PA4: a polyamide-6 having a molecular weight of 71,350 and an amine endgroup concentration of 79.4 microequivalents per gram, commercially available from Allied Chemical under the trade name "CAPRON XPN1250".
IM1: a styrene-hydrogenated isoprene diblock copolymer having a molecular weight of about 174,000 and comprising about 26% styrene and 74% isoprene units, commercially available from Shell Chemical under the trade name "Kraton G1702".
IM2: a styrene-hydrogenated butadiene diblock copolymer having a molecular weight of about 74,000 and comprising about 27% styrene and 73% butadiene units, commercially available from Shell Chemical under the trade name "Kraton G1650".
PE: a reaction product of a cresol novolak with epichlorohydrin, having a molecular weight of about 1270, an average of 5.4 epoxy groups per molecule and an epoxy equivalent weight of 235 commercially available from Ciba-Geigy under the designation "ECN9495".
Lubricant: a hydrogenated α-olefin polymer supplied by Henkel under the trade name "EMERY 3008".

### Examples 1-3

Various proportions of PE were incorporated in blends of 52 parts of PPE, 38 parts of PA1, 3 parts of PA2, 7 parts of IM1 and 0.6 phr of anhydrous citric acid. The blends were prepared by wetting the pelletized polyamide with a small portion of lubricant, dusting the PE on the wetted pellets, extruding the PPE, impact modifier and citric acid through a 30 mm twin screw extruder and adding the polyamide and PE downstream, at extrusion temperatures in the range of 265-296°C and a melt temperature of 318°C.

Test specimens were produced by injection molding under two sets of conditions, both employing a melt temperature of 295°C, a mold temperature of 88°C, a screw speed of 150 rpm and an injection speed of 50%. The "regular" cycle and the "long" cycle employed cycle times of 36 and 144 seconds, respectively. Apparent viscosity was also determined. Various samples were molded under various conditions, including varying ram injection speeds and cycle times, until attainment of the "critical injection speed" was demonstrated by visual detection of severe tearing and stretching of the polyamide matrix and defects in the form of "sharkskin" surface textures.

The results are given in Table I, in comparison with two controls employing no PE: Control 1 which additionally employed no lubricant, and Control 2 in which lubricant was present.

**TABLE I**

| | Example | | | | | | Control | | |
|---|---|---|---|---|---|---|---|---|---|
| | 1 | | 2 | | 3 | | 1 | | 2 |
| | Reg. | Long | Reg. | Long | Reg. | Long | Reg. | Long | |
| PE, phr | 0.25 | 0.25 | 0.5 | 0.5 | 1.0 | 1.0 | - | - | - |
| Apparent visc., Pa.s* | 251 | - | 288 | - | 356 | - | 204 | - | - |
| Critical injection speed, cm/sec | 12.7 | - | 20.3 | - | 20.3 | - | 7.6 | - | 7.6 |
| Tensile elongation, %** | 81 | - | 60 | - | 54 | - | 38 | - | - |
| Dynatup impact strength: | | | | | | | | | |
| Total energy, J | 63.7 | 4.1 | 61.0 | 13.6 | 12.2 | 16.3 | 63.7 | 1.4 | - |
| Max. load, kg | 565 | 142 | 566 | 271 | 145 | 304 | 588 | 76 | - |
| Failure mode*** | D | B | D | S | S | S | D | B | - |

| | | | | | | | | | |
|---|---|---|---|---|---|---|---|---|---|
| *Apparent shear rate 1000 sec⁻¹; temperature 305°C. | | | | | | | | | |
| **At break. | | | | | | | | | |
| ***B - brittle, S - split, D - ductile. | | | | | | | | | |

It is apparent that the compositions of this invention generally exhibit comparable impact strengths to those of the controls under "regular" molding conditions, and substantially superior impact strengths under "long" conditions. This applies to all three criteria in the Dynatup test. In addition, they can be injection molded under more severe conditions, as exemplified by higher injection speeds, than the controls. The same trend is shown in tensile elongation.

The increase in apparent viscosity noted for the compositions of the invention is, as previously explained, an advantage in blow molding operations. For injection molding, such changes as substitution of a lower molecular weight polyamide can be made to optimize viscosity properties.

Visual inspection of test specimens corresponding to the controls showed a clearly discernible "sharkskin" surface in certain areas, both at short and long cycle times. By contrast, the specimens corresponding to Examples 1-3 had clearly enhanced surface appearance with increasing levels of PE for both cycle times. Dispersed phase particle size analysis by scanning electron microscopy showed a finer dispersion of particles in the blends containing PE. The volume average diameter for the blends decreased from 2.34-2.88 microns for Controls 1 and 2 to 1.01-1.88 microns for Examples 1-3.

### Examples 4-7

Following a procedure similar to that of Examples 1-3, blends of various proportions of PPE, polyamide and impact modifier and also containing 0.6 phr of citric acid were extruded and molded. Of the two polyamides employed, PA3 is highly elastic and relatively expensive while PA4 has less elasticity and is lower priced.

In addition to impact strength, flexural properties and tensile properties, the complex viscosity and storage modulus of each composition was tested to determine its suitability for blow molding. The relevant parameters and results are given in Table II, in comparison with four controls.

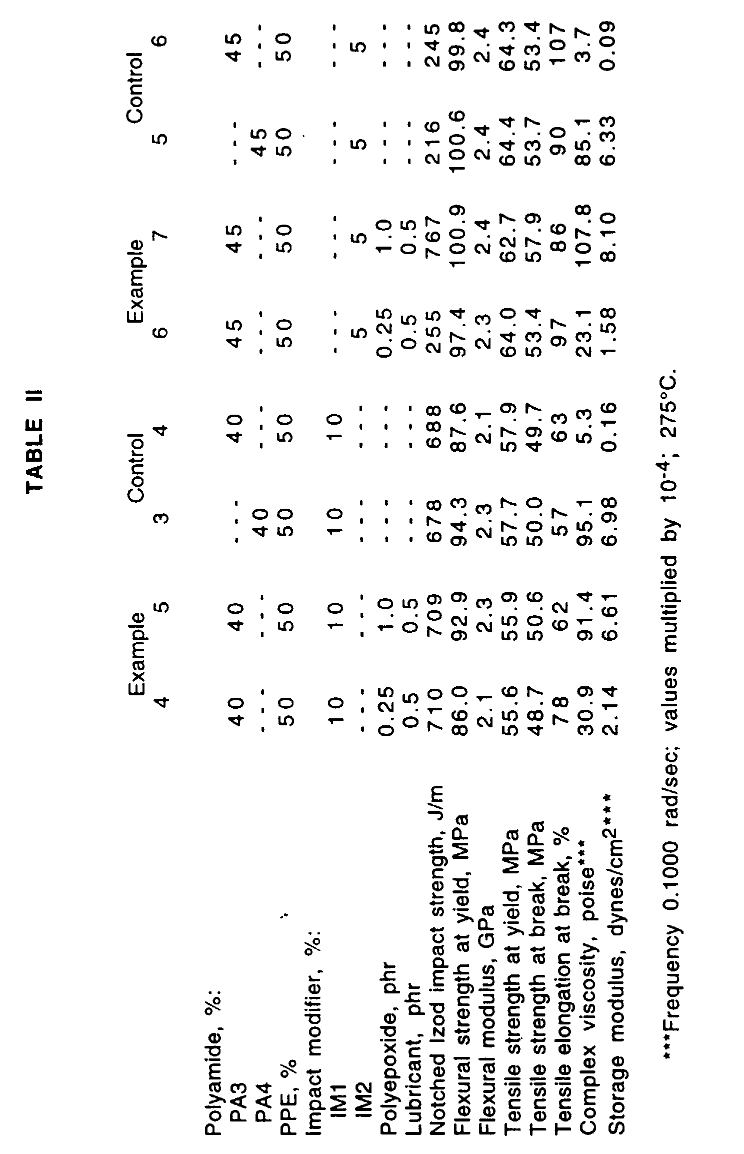

Recognizing that Controls 3 and 5 alone employ the polyamide of more favorable elastic properties for blow molding, several trends are apparent from Table II. In the first place, impact, tensile and flexural properties of the compositions of this invention are generally comparable to those of the corresponding controls. In the second place, the theological properties of the compositions of this invention are for the most part much closer to those of Controls 3 and 5, employing the polyamide with superior elastic properties, than to Controls 4 and 6 employing the same lower elasticity polyamide as the compositions of the invention. Thus, it is apparent that the invention permits polyamides of less superior elastic properties to be substituted for higher elasticity polyamides in compositions intended for blow molding.

## Claims

1. A resinous composition free from condensation polyesters, said composition comprising the following and any reaction products thereof:
(A) a continuous phase comprising at least one polyamide;
(B) a polyphenylene ether resin;
(C) at least one impact modifying polymer;
(D) a non-polymeric functionalizing compound containing at least two functional groups capable of reacting with polyphenylene ethers and polyamides; and
(E) a minor proportion, effective to improve physical properties or surface appearance, of at least one polyepoxy compound having an epoxy equivalent weight of at most about 4,000 or at least one poly(ortho ester);
components B and C forming a dispersed phase in said continuous phase.

2. A composition according to claim 1 wherein reagent E is present in the amount of about 0.1-1.25 parts by weight per 100 parts of the combination of components A, B and C.

3. A composition according to claim 2 wherein the epoxy equivalent weight of reagent E is no higher than about 2,000 and its molecular weight is at most about 4,000.

4. A composition according to claim 2 wherein reagent E is an epoxidized novolak.

5. A composition according to any preceding claim wherein reagent D contains at least one group capable of reacting with each of reagents A and B, said groups comprising carboxylic acid, anhydride, amide, ester, orthoester, epoxide, olefin, halotriazine, phosphate, hydroxy or amino groups.

6. A composition according to any preceding claim wherein component C is free from carboxylic acid groups.

7. A composition according to claim 6 wherein component C is a styrene-diene block copolymer.

8. A composition according to any preceding claim which comprises about 25-60% by weight of component B and about 2-20% of component C based on components A, B and C, with the balance being polyamide.

9. A composition according to claim 8 wherein reagent D is present in the amount of about 0.1-1.0 part per 100 parts of the combinations of components A, B and C.

10. A resinous composition free from condensation polyesters, said composition comprising the following and any reaction products thereof:
(A) a continuous phase comprising a polyamide-6, a polyamide-66 or a mixture thereof;
(B) a poiyphenylene ether resin;
(C) a styrene-diene diblock or triblock copolymer in which the diene blocks are optionally hydrogenated;
components B and C being present in the amounts of about 25-60% and about 2-20% by weight respectively, based on total components A, B and C, with the balance thereof being component A;
(D) citric acid, maleic anhydride, fumaric acid or trimellitic anhydride acid chloride in the amount of about 0.1-1.0 part by weight per 100 parts of the combination of components A, B and C; and
(E) at least one epoxidized novolak having an epoxy equivalent weight of at most about 4,000, in the amount of about 0.1-1.25 part by weight per 100 parts of the combination of components A, Band C;
components B and C forming a dispersed phase in said continuous phase.
